(19) Europäisches Patentamt
European Patent Office
Office européen des brevets

(11) **EP 2 537 047 B1**

(12) **FASCICULE DE BREVET EUROPEEN**

(45) Date de publication et mention de la délivrance du brevet:
**16.10.2013 Bulletin 2013/42**

(21) Numéro de dépôt: **11705841.2**

(22) Date de dépôt: **15.02.2011**

(51) Int Cl.:
***G01T 1/17*** (2006.01)

(86) Numéro de dépôt international:
**PCT/EP2011/052170**

(87) Numéro de publication internationale:
**WO 2011/101323 (25.08.2011 Gazette 2011/34)**

(54) **PROCEDE DE MESURE EN LIGNE DE RAYONNEMENTS IONISANTS**

ONLINE-VERFAHREN ZUR MESSUNG IONISIERENDER STRAHLUNG

ONLINE METHOD FOR MEASURING IONIZING RADIATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.02.2010 FR 1051110**

(43) Date de publication de la demande:
**26.12.2012 Bulletin 2012/52**

(73) Titulaire: **Commissariat à l'Énergie Atomique et aux Énergies Alternatives 75015 Paris (FR)**

(72) Inventeurs:
- **KONDRASOVS, Vladimir**
  **F-91120 Palaiseau (FR)**
- **COULON, Romain**
  **F-58400 Chaulgnes (FR)**
- **NORMAND, Stéphane**
  **F-78200 Mantes La Jolie (FR)**

(74) Mandataire: **Ilgart, Jean-Christophe et al Brevalex 95, rue d'Amsterdam FR-75378 Paris Cedex 8 (FR)**

(56) Documents cités:
**FR-A1- 2 879 305      US-A1- 2002 146 087**

- **BARAT E ET AL: "A bimodal Kalman smoother for nuclear spectrometry", NUCLEAR INSTRUMENTS & METHODS IN PHYSICS RESEARCH, SECTION - A:ACCELERATORS, SPECTROMETERS, DETECTORS AND ASSOCIATED EQUIPMENT, ELSEVIER, AMSTERDAM, NL LNKD- DOI:10.1016/J.NIMA. 2006.05.243, vol. 567, no. 1, 1 novembre 2006 (2006-11-01), pages 350-352, XP025056358, ISSN: 0168-9002 [extrait le 2006-11-01]**
- **ZAIDEL' R M: "A method of processing the signals from ionizing radiation detectors", MEASUREMENT TECHNIQUES, KLUWER ACADEMIC PUBLISHERS-PLENUM PUBLISHERS, NE LNKD- DOI: 10.1007/S11018-007-0090-7, vol. 50, no. 4, 1 avril 2007 (2007-04-01), pages 440-444, XP019531778, ISSN: 1573-8906**

**Description**

**DOMAINE TECHNIQUE**

L'invention se situe dans le domaine de la détection en ligne de faibles fluctuations du flux de rayonnements radioactifs parmi les fluctuations d'origine statistique. Elle concerne plus spécifiquement un procédé de lissage associé à la mesure en ligne d'un signal délivré par un détecteur de rayonnements ionisants comportant les étapes suivantes :

- détecter des impulsions contenues dans des échantillons successifs dudit signal,
- compter le nombre $N_i$ d'impulsions détectées pour chaque échantillon.

L'invention concerne également un dispositif de mesure en ligne d'un signal de rayonnements ionisants comportant:

- un détecteur de rayonnement radioactif,
- un module électronique de conditionnement de signaux de rayonnement radioactif détectés,
- un module de comptage d'impulsions contenues dans des échantillons successifs du signal détecté.

**ÉTAT DE LA TECHNIQUE ANTÉRIEURE**

Les détecteurs connus fonctionnant en mode comptage utilisés dans l'industrie donnent une estimation du taux de comptage par simple intégration avec une constante d'intégration ajustée en fonction du système mesuré et des paramètres physiques intrinsèques au capteur. D'autres variantes de cette méthode sont communément utilisées, telle que par exemple l'intégration glissante, dans lesquelles le signal est intégré avec une constante d'intégration constante pour un pas de temps constant permettant ainsi de faciliter le réglage de la constante d'intégration et d'avoir une moyenne temporelle. Afin d'améliorer artificiellement la précision statistique sans perdre en sensibilité, un facteur d'oubli (par exemple exponentiel) peut également être appliqué pour pondérer chaque événement de manière dégressive en fonction du retard.

Ces méthodes sont très destructives et archaïques en regard des possibilités offertes par les possibilités de calcul embarqué, de type microcontrôleurs. Aussi, des méthodes plus sophistiquées sont-elles développées en vue de réaliser un traitement plus adaptatif du signal en fonction des variations aléatoires de l'espace inter-impulsion. Toutefois, ces dernières méthodes ne prennent pas en compte la nature stochastique du signal nucléaire.

En effet, selon ces approches, le signal est considéré comme peu fluctuant dans le temps. Or ce n'est physiquement pas le cas, dans la mesure où le signal peut varier, dans des proportions importantes, d'un instant à l'autre de l'échantillonnage, la mesure à l'instant T ne préjugeant en rien de ce que sera la mesure à l'instant T+1.

Le document US-A-2002146087 divulgue un procédé de lissage associé à la mesure en ligne d'un signal délivré par un détecteur de rayonnements ionisants comportant les étapes suivantes :

- détecter des impulsions contenues dans des échantillons successifs dudit signal E.,

- compter le nombre Ni d'impulsions détectées,

- appliquer audit signal un filtrage non-linéaire non destructif utilisant un seuil de détection fixe,

- appliquer au signal filtré un lissage adaptatif utilisant un traitement non linéaire.

D'autres méthodes sophistiquées de traitement statistique du signal, fondées sur une approche Bayesienne résolue par méthodes Monte-Carlo par chaînes de Markov sont également connues. Celles-ci sont très itératives et nécessitent une puissance de calcul associé importante ce qui les rend difficilement utilisables dans un détecteur nucléaire.

Un but de l'invention est un procédé de lissage et un lisseur susceptible d'être associé à un calculateur embarqué microcontrôleur, d'introduire une non-linéarité par rapport aux méthodes d'intégration et de prendre en compte la nature stochastique du signal nucléaire avec un temps de calcul en adéquation avec les contraintes de temps réel de l'électronique embarquée.

**EXPOSÉ DE L'INVENTION**

Ce but est atteint au moyen d'un procédé de lissage associé à la mesure en ligne d'un signal délivré par un détecteur de rayonnements ionisants comportant les étapes suivantes :

- détecter des impulsions représentant des échantillons successifs dudit signal,
- compter le nombre $N_i$ d'impulsions détectées.

Le procédé selon l'invention comporte les étapes suivantes :

- appliquer audit signal un filtrage non destructif utilisant un seuil de détection évolutif,
- appliquer au signal filtré un lissage adaptatif utilisant un traitement non linéaire en fonction de l'état d'évolution dudit signal de manière à obtenir un taux de comptage lissé desdites impulsions.

Ce procédé permet la détection de faibles variations de radioactivité malgré un bruit statistique élevé intrinsèque à la mesure nucléaire.

Dans un mode préféré de mise en oeuvre, le procédé selon l'invention comporte en outre les étapes suivantes :

- pour un échantillon $E_i$ du signal détecté, mémoriser dans une pile primaire, les nombres $N_{i+m}$ d'impulsions comptées pendant un temps élémentaire $\Delta t$, m variant de 1 à $N_M$, $N_M$ représentant le nombre de valeurs que peut contenir ladite pile primaire, et,
- mémoriser dans une pile secondaire des sommes cumulées des nombres $N_{i+m}$, normalisée par le temps d'acquisition, de sorte que ladite pile secondaire contienne des valeurs moyennes $S_j$ obtenues par convergence d'une série de valeurs estimées.

Préférentiellement, pour j=1 à $N_M$, où $N_M$ représente la quantité des valeurs sauvegardées et M est la taille de la mémoire de la pile primaire, les valeurs moyennées $S_{k+NM}$ sont calculées selon l'équation I suivante :

$$S_j = \frac{\sum_{m=1}^{m=a_j} N_{i+m}}{a_j \Delta t} \quad (\mathrm{I})$$

$a_j$ représentant la série de remplissage des piles secondaires.

Il est à noter que la série $a_j$ de remplissage des piles secondaires n'est pas forcément constante. Une fonction constante induit un poids de crédibilité entre deux positions consécutives différentes en termes de compromis gain/perte de précision statistique et gain/perte de précision temporelle.

En outre, construire une échelle de discrétisation non-linéaire en temps permet d'être plus rigoureux par rapport à la nature Poisson du signal et d'augmenter le potentiel de lissage (la plage d'intégration maximale étant largement augmentée). Une fonction d'échantillonnage en temps est proposée comme suit :

Soit l'échantillon de signal $E_i$ estimé par différentes valeurs $S_j$ de la pile secondaire, tel que :

$$S_j = \frac{\sum_{m=1}^{m=a_j} N_{i+m}}{a_j \Delta t} \quad (1)$$

$N_{i+m}$ : Nombre d'évènements comptés dans la position $m$ de la pile primaire.
$\Delta t$ : Le pas de temps de la pile primaire.

L'écart type associé au signal $S_j$ est défini dans l'équation 2.

$$\sigma(S_j) = \sqrt{\frac{S_j}{a_j \Delta t}} \quad (2)$$

Soit $\alpha$ le rapport du gain de précision statistique entre deux positions par rapport la perte d'information temporelle :

$$\frac{\Delta\left(\sigma\left(S_j\right)\right)}{a_j\Delta t} = \alpha \qquad (3)$$

$\Delta\sigma\left(S_j\right)$ : Différence de précision sur la valeur de S entre les positions $j$ et $j-1$.

La résolution de l'équation (3) dans un espace continu donne la valeur de $\alpha$ :

$$\alpha = -\frac{\sqrt{S}}{2}\left(a_j\Delta t\right)^{-3/2} \qquad (4)$$

La valeur de pas de temps finalement obtenue est présentée dans l'équation (5) ci-après :

$$a_j = -\left[2\Delta\left(\frac{\sigma\left(S_i\right)}{S}\right)\sqrt{S}\Delta t\, a_{j-1}^{3/2}\right] + a_{j-1} \qquad (5)$$

Selon une variante de mise en oeuvre, le procédé selon l'invention comporte les étapes suivantes :

- balayer la pile secondaire de $k = 1$ à $k = N_M$ pour détecter une variation de radioactivité, et,
- à chaque itération $k$, comparer l'évolution $\Delta S_k = |S_k - S_{k+1}|$ à un seuil de détection $SD_k$ correspondant à la plus faible valeur de variation du signal détectée aux probabilités $\alpha$ et $\beta$ près, $\alpha$ représentant au risque de détection à tort, et $\beta$ représentant un risque de non détection d'un changement de radioactivité.

Dans cette variante, le seuil de détection $SD_k$ est une fonction de l'écart type de Poisson cumulé des valeurs $S_k$ et $S_{k+1}$ représentées par l'équation II suivante :

$$\begin{cases} \sigma^2\left(S_k\right) = \dfrac{S_k}{a_k\Delta t} \\[2mm] \sigma^2\left(S_{k+1}\right) = \dfrac{S_{k+1}}{a_{k+1}\Delta t} \\[2mm] SD_k \approx Q\sqrt{\sigma^2\left(S_k\right) + \sigma^2\left(S_{k+1}\right)} \end{cases} \qquad (\mathrm{II})$$

Q étant un facteur d'élargissement conditionnant le lissage du signal dépendant des probabilités $\alpha$ et $\beta$ comme selon les équations III suivantes :

$$\begin{cases} \beta + \alpha = 1 \\[2mm] \beta \approx \dfrac{1}{\sqrt{2\pi}} \displaystyle\int_{-Q}^{\infty} e^{-x^2/2}\, dx \end{cases} \qquad (\mathrm{III})$$

Le procédé selon l'invention est implémenté par un dispositif de mesure en ligne d'un signal de rayonnements ionisants comportant:

- un détecteur de rayonnement radioactif,
- un module électronique de conditionnement de signaux de rayonnements radioactifs détectés,
- un module de comptage d'impulsions représentant des échantillons successifs d'un signal détecté, caractérisé en ce que ledit module de comptage comporte :
- un filtre non destructif utilisant un seuil de détection évolutif,
- un lisseur adaptatif utilisant un traitement non linéaire en fonction de l'état d'évolution dudit signal de manière à obtenir un taux de comptage lissé desdites impulsions.

Ce dispositif comporte en outre :

- une pile primaire destinée à mémoriser le nombre $N_i$ d'impulsions comptées pendant un temps élémentaire $\Delta t$, sur un échantillon $E_i$ du signal détecté, i variant de 1 à $N_M$, $N_M$ représentant le nombre de valeurs que peut contenir ladite pile primaire,
- une pile secondaire destinée à mémoriser la somme cumulée des nombres $N_i$ normalisée par le temps d'acquisition à chaque échantillon $E_i$, de sorte que ladite pile secondaire contienne les valeurs moyennes $S_{k+NM}$ obtenues par convergence d'une série de valeurs estimées $S_j$ pour l'échantillon de signal $E_i$.

## BRÈVE DESCRIPTION DES DESSINS

D'autres caractéristiques et avantages de l'invention ressortiront de la description qui va suivre, prise à titre d'exemple non limitatif, en référence aux figures annexées, dans lesquelles :

- la figure 1 illustre schématiquement, une chaîne de mesure en ligne d'un signal de rayonnements ionisants selon l'invention,
- la figure 2 illustre schématiquement une procédure de remplissage d'une pile primaire de la chaîne de la figure 1,
- la figure 3 illustre schématiquement une procédure de remplissage d'une pile secondaire de la chaîne de la figure 1,
- la figure 4 représente un organigramme illustrant l'étape de lissage du procédé selon l'invention,
- la figure 5 représente des courbes illustrant l'évolution des risques de détection/non-détection en fonction d'un facteur d'élargissement Q conditionnant le mode de fonctionnement d'un lisseur de la chaîne de la figure 1,
- la figure 6 illustre des plages de fonctionnement du lisseur de la chaîne de la figure 1 en fonction du facteur d'élargissement Q,
- la figure 7 illustre schématiquement la réponse du lisseur de la chaîne de la figure 1 à un créneau.

## EXPOSÉ DÉTAILLÉ DE MODES DE RÉALISATION PARTICULIERS

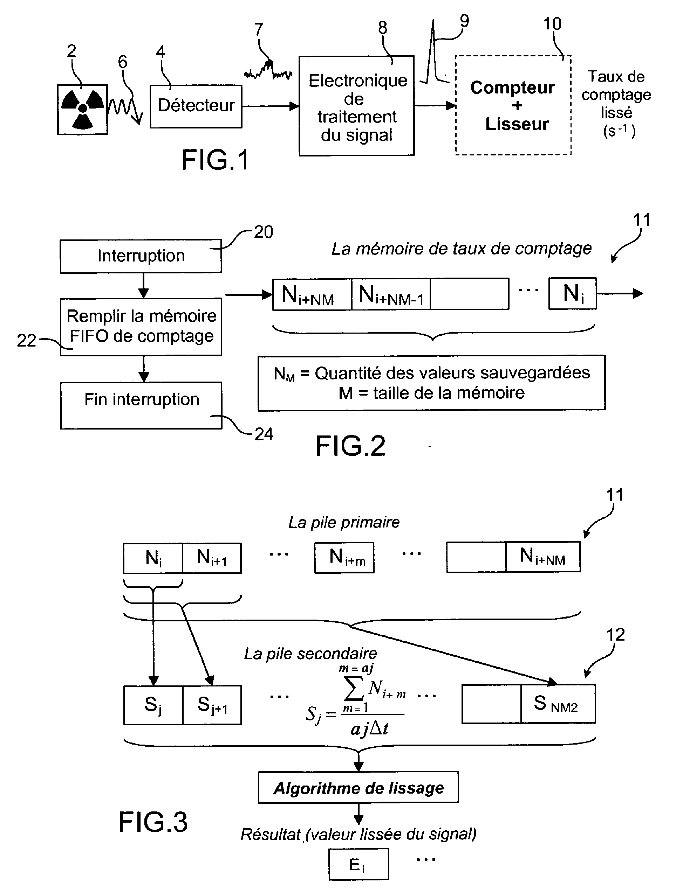

La figure 1 représente un dispositif de mesure en ligne de la radioactivité d'un système radioactif 2 évoluant dans le temps. Ce dispositif comporte un détecteur 4 recevant un signal 6 de rayonnement radioactif produit par un système radioactif 2, et délivrant à un module électronique 8 des échantillons $E_i$ 7 du signal détecté. Le module électronique 8 filtre et amplifie les impulsions $I_i$ 9 contenues dans les échantillons successifs $E_i$ 11 et délivre les impulsions amplifiées et filtrées à un module de comptage 10.

Le module de comptage 10 comporte un filtre non destructif utilisant un seuil de détection évolutif, un lisseur adaptatif utilisant un traitement non linéaire en fonction de l'état d'évolution dudit signal de manière à obtenir un taux de comptage lissé desdites impulsions, une pile primaire 11 de type FIFO (First In, First Out) susceptible de contenir $N_M$ valeurs numériques représentatives du taux de comptage des impulsions, et une pile secondaire 12 destinée à recevoir la somme cumulée du nombre d'impulsions $\displaystyle\sum_{m=1}^{m=a_i} N_{i+m}$ comptées pendant un temps élémentaire $\Delta t$.

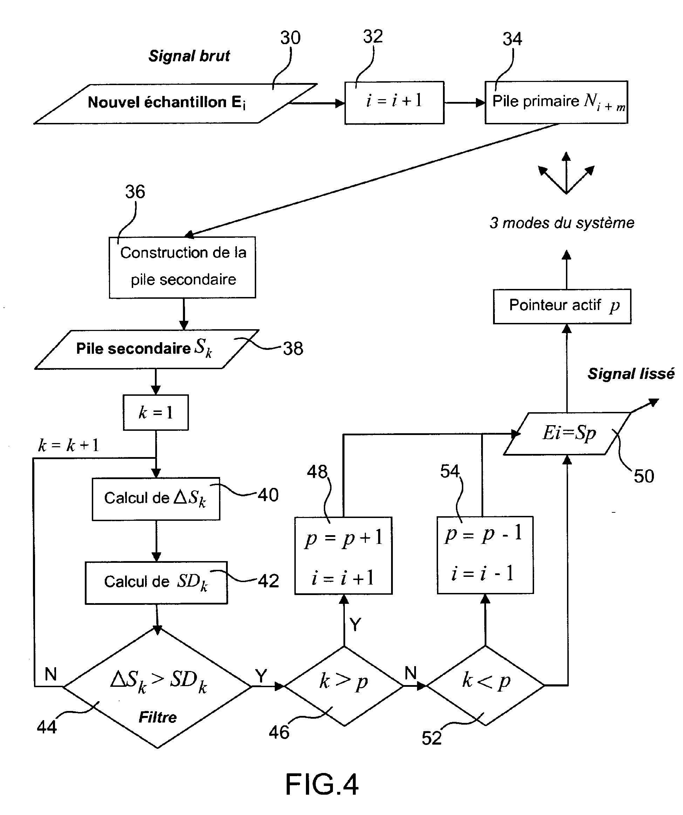

Le procédé selon l'invention se caractérise par l'adaptabilité du lisseur à l'évolution du signal par l'utilisation d'un pointeur actif p permettant de lisser très finement les transitoires d'activité en accord avec les contraintes de temps réel. Le temps de traitement est accéléré sur les phases d'activité constante et ralenti pendant les transitoires d'activité. A chaque traitement, la position pointée dans la pile secondaire 12 est déplacée en direction du changement d'activité comme cela sera décrit plus en détail en référence à la figure 4.

En fonctionnement, le lisseur reçoit un flux d'impulsions et fournit le nombre d'impulsions comptées $N_{i+m}$ pendant un temps élémentaire $\Delta t$ à la pile primaire. La procédure de remplissage de la pile primaire 11 est présentée dans la figure 2.

En référence à cette figure 2, la détection est interrompue à l'étape 20.

A l'étape 22, le lisseur fournit le nombre d'impulsions comptées $N_i$ pendant un temps élémentaire $\Delta t$ à la pile primaire.

A l'étape 24, la détection reprend.

Comme cela est illustré par la figure 3, à chaque échantillon $E_i$ du signal de radioactivité détecté, le lisseur effectue la somme cumulée des nombres successifs d'impulsions $N_i$, $N_{i+1}$, ..., $N_{i+NM}$ et fournit à la pile secondaire 12 une valeur lissée du taux de comptage normalisée par le temps d'acquisition.

La pile secondaire 12 contient alors une série $S_j$ de valeurs estimées pour l'échantillon de signal $E_i$. Cette série converge de la valeur $S_j$ correspondant au signal brut, peu précise mais juste, à une valeur très moyennée $S_{NM2}$.

Le filtre choisit une valeur dans cette série de manière à améliorer la précision tout en garantissant la justesse de la mesure.

Il est à noter que le filtre permettant de détecter une variation de radioactivité est construit suivant les caractéristiques intrinsèques du signal nucléaire. Ce dernier a une nature stochastique, de tel sorte que lorsque la radioactivité mesurée est stable, l'instant d'arrivée des événements suit strictement une loi de Poisson, c'est-à-dire que la variance du signal est égale à sa moyenne. Les fluctuations du signal peuvent être lissées par intégration en regard de cette condition. Lorsque l'activité évolue, cette condition n'est plus respectée, le signal ne doit plus être intégré.

La figure 4 représente un organigramme illustrant l'étape de lissage du procédé selon l'invention.

L'étape 30 correspond à la détection d'un nouvel échantillon $E_i$ d'un signal radioactif par le détecteur 4.

A l'étape 32, le nombre $N_{1+N_M}$ d'impulsions correspondant au signal brut de $E_i$, est compté puis mémorisé dans la pile primaire 11 (étape 34).

L'étape 36 consiste à créer la pile secondaire 12 en y inscrivant la somme cumulée des nombres $N_{i+m}$ successifs relatifs à l'échantillon $E_i$ mémorisé dans la pile primaire.

A l'étape 38, la somme cumulée est calculée puis mémorisée dans la pile secondaire 12.

Pour détecter une variation de radioactivité, la pile secondaire 12 est balayée, et à chaque itération k de la somme cumulée $S_k$, la variation $\Delta S_k = |S_k - S_{k+1}|$ est calculée (étape 40) puis, à l'étape 42, on calcule un seuil de détection $SD_k$ correspondant à la plus faible valeur que devrait avoir la variation de signal pour pouvoir être systématiquement déclarée détectée aux probabilités $\alpha$ et $\beta$ près. Le risque $\alpha$ étant un risque de première espèce, qui correspond au risque de détection à tort, et le risque $\beta$ étant un risque de deuxième espèce, qui correspond au risque de non détection d'un changement de radioactivité.

A l'étape 44, la variation $\Delta S_k = |S_k - S_{k+1}|$ est comparée au seuil $SD_k$.

Ce seuil de détection est une fonction de l'écart type Poisson cumulé des valeurs $S_k$ et $S_{k+1}$ présentées dans l'équation II :

$$\begin{cases} \sigma^2\left(S_k\right) = \dfrac{S_k}{a_k \Delta t} \\[2mm] \sigma^2\left(S_{k+1}\right) = \dfrac{S_{k+1}}{a_{k+1} \Delta t} \\[2mm] SD_k \approx Q\sqrt{\sigma^2\left(S_k\right) + \sigma^2\left(S_{k+1}\right)} \end{cases} \quad (II)$$

Le facteur d'élargissement $Q$ conditionne le mode de fonctionnement du lisseur. Il dépend des probabilités $\alpha$ et $\beta$ comme présenté dans l'équation III:

$$\begin{cases} \beta + \alpha = 1 \\[2mm] \beta \approx \dfrac{1}{\sqrt{2\pi}} \int\limits_{-Q}^{\infty} e^{-x^2/2} dx \end{cases} \quad (III)$$

A l'étape 46, la position k pointée dans la pile secondaire 12 est comparée du pointeur actif p (mémoire de la position obtenue pour l'échantillon précédent).

Si k>p, le pointeur actif p et la position de l'échantillon $E_i$ enregistré dans la pile primaire 11 sont incrémentés d'une unité (p=p+1) et (i=i+1) (étape 48).

Dans ce cas, la réponse envoyée (étape 50) est la valeur du signal de l'emplacement définie par le pointeur dans la pile secondaire 12.

L'opération est répétée jusqu'à ce que le point de détection soit situé avant le pointeur actif (k<p) (étape 52). Dans ce cas, le pointeur actif p et la position de l'échantillon $E_i$ enregistré dans la pile primaire 11 sont décrémentés d'une unité (p=p-1) et (i=i-1) (étape 54).

La réponse est alors estimée en deux itérations, ce qui permet d'affiner le lissage des transitoires d'activité tout en assurant le traitement en temps réel du signal.

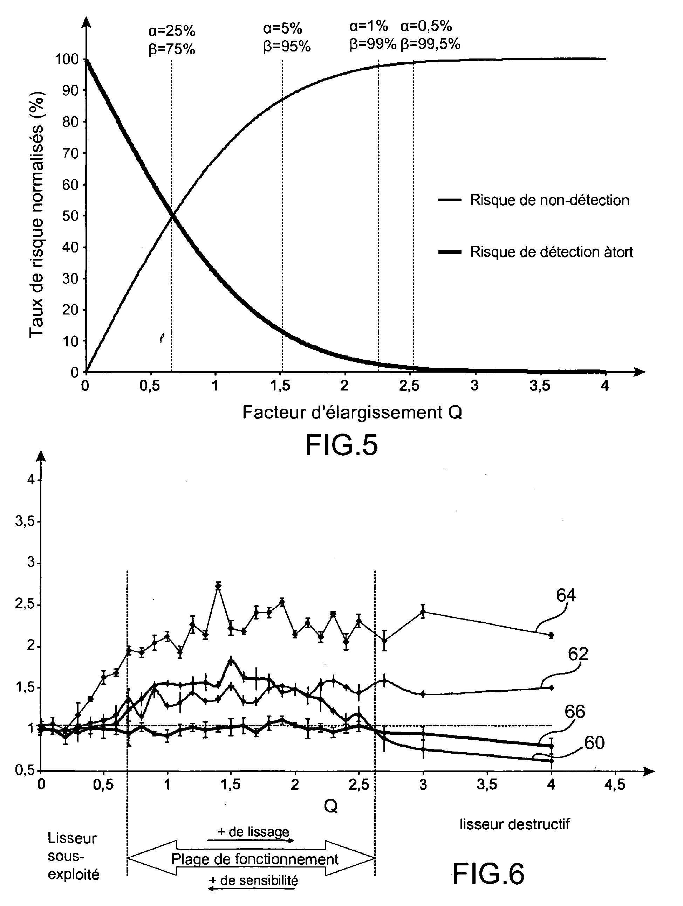

La figure 5 présente l'évolution des probabilités $\alpha$ et $\beta$ normalisées en fonction du facteur d'élargissement $Q$.

Cette figure 5 montre que le filtre est équilibré pour la valeur $Q$ =0,67. Une valeur inférieure augmente le risque de détection à tort par rapport au risque de non-détection, le lisseur est quasiment inactif. Une valeur supérieure diminue la sensibilité du filtre mais le lissage est augmenté. Le risque de détection à tort devient négligeable à partir de $Q$=2,6.

Une valeur supérieure augmente le lissage mais le filtre perd ses performances.

La figure 6 présente le rendement du lisseur en termes de gain en justesse pour quatre signaux simulés d'amplitudes différentes, soit un signal peu bruité 60, un signal bruité 62, un signal très bruité 64, un signal très peu bruité 64.

Cette figure 6 montre que le lisseur débruite efficacement le signal lorsque le facteur d'élargissement du filtre se situe dans la plage de fonctionnement comprise entre $Q$=0,67 et $Q$=2,6.

La courbe 66 montre l'apport du lisseur à haut taux de comptage. Lorsque le taux de comptage est élevé, le bruit statistique étant par définition très faible, le lisseur n'apporte rien. Cette courbe met en exergue l'effet destructeur du sur-lissage lorsque $Q$>2,6.

A faible taux de comptage, le lisseur permet un gain significatif en précision. La valeur optimale du rendement est atteinte dans la plage 0,67 > $Q$ > 2,6, elle dépend du taux de comptage et des gradients de radioactivité. Quatre modes de fonctionnement peuvent être définis :

- $Q$ =0,67 : Le filtre est très sensible et le lissage doux. Le moindre changement de radioactivité est quasi-systématiquement détecté.

- $Q$=1,6 : Le lissage est moyen. Cette valeur est un bon compromis, la justesse et la précision apportées par le lisseur sont significatives avec une dégradation minime des faibles gradients de radioactivité.

- $Q$=2,6 : Le lissage est fort. Un gain optimal est apporté sur la précision du signal, le filtre est toutefois moins sensible aux faibles gradients de radioactivité.

- $Q$ > 2,6 : Le lissage est destructif. Un mode d'alarme peut être réalisé avec une probabilité de fausses alertes égale à $\alpha$. (exemple pour $Q$>3,3, $\alpha$=0,1%).

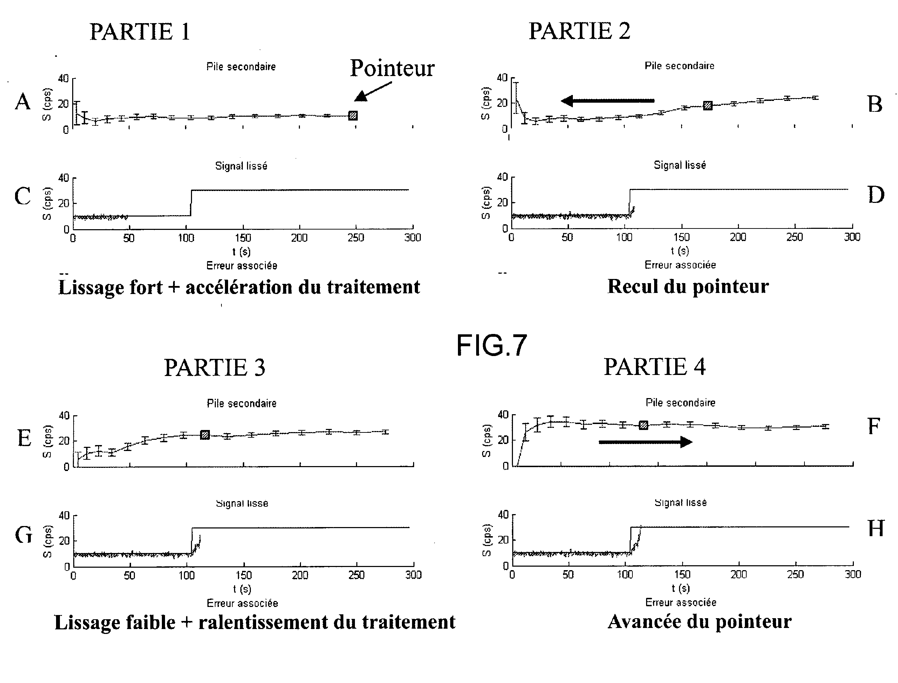

La figure 7 illustre schématiquement la réponse du lisseur à un créneau.

Sur la partie de la figure 7, lorsque le lisseur traite un signal qu'il juge constant au regard des critères $\alpha$ et $\beta$, comme cela est illustré par la figure 7C, le pointeur est naturellement placé sur la position de la pile secondaire qui assure un lissage maximal comme cela est illustré par la figure 7A.

Sur la partie 2, on constate que, dès que la variation de signal est enregistrée dans la mémoire du compteur, et si le filtre détecte cette variation significative dans une position de la pile secondaire placée avant la position précédemment pointée, comme cela est illustré par la figure 7B, le pointeur recule d'une position. Comme cela est illustré par la figure 7D, le lisseur diminuera la force du lissage pour suivre au mieux le changement de signal (perte de précision statistique / gain de précision temporelle).

En référence à la partie 3 de la figure 7, lors du recul du pointeur, deux itérations sont effectuées pour un échantillon $E_i$ enregistré dans la pile primaire. Tant que la variation de signal est détectée en amont de la position du pointeur, ce dernier continue de reculer, jusqu'à atteindre une position très peu lissée, comme cela est illustré par la figure 7E assurant l'oubli du signal passé, comme cela est illustré par la figure 7G.

Ensuite, en référence à la partie 4 de la figure 7, le filtre ne détecte plus de variation de signal dans la pile secondaire. Le pointeur va alors se déplacer vers les positions plus lissées enregistrées dans la pile secondaire comme cela est illustré par la figure 7F. Lors de l'avancement du pointeur, un échantillon $E_i$ sur deux est traité. Le gain en termes de précision statistique permet alors une convergence rapide vers la nouvelle valeur du signal comme cela est illustré par la figure 7H.

**Revendications**

1. Procédé de lissage associé à la mesure en ligne d'un signal délivré par un détecteur de rayonnements ionisants comportant les étapes suivantes :

   - détecter des impulsions contenues dans des échantillons successifs dudit signal $E_i$,
   - compter le nombre $N_i$ d'impulsions détectées,

   procédé **caractérisé en ce qu'**il comporte en outre les étapes suivantes :

   - appliquer audit signal un filtrage non destructif utilisant un seuil de détection évolutif $SD_k$,
   - appliquer au signal filtré un lissage adaptatif utilisant un traitement non linéaire en fonction de l'état d'évolution dudit signal de manière à obtenir un taux de comptage lissé desdites impulsions.

2. Procédé selon la revendication 1 comportant en outre les étapes suivantes :

   - pour un échantillon $E_i$ du signal détecté, mémoriser dans une pile primaire, les nombres $N_{i+m}$ d'impulsions comptées pendant un temps élémentaire $\Delta t$, m variant de 1 à $N_M$, $N_M$ représentant le nombre de valeurs que peut contenir ladite pile primaire, et,
   - mémoriser dans une pile secondaire (12) la somme cumulée des nombres $N_{i+m}$, normalisée par le temps d'acquisition $a_j\Delta t$, de sorte que ladite pile secondaire (12) contienne une valeur moyenne $S_{NM2}$ obtenue par convergence d'une série de valeurs estimées $S_j$ pour l'échantillon de signal $E_i$.

3. Procédé selon la revendication 2, dans lequel, pour j = 1 à $N_{M2}$, les valeurs moyennes $S_j$ sont calculées selon l'équation suivante :

$$S_j = \frac{\sum_{m=1}^{m=a_j} N_{i+m}}{a_j \Delta t}$$

.

4. Procédé selon la revendication 1, comportant en outre les étapes suivantes :

   - balayer la pile secondaire (12) pour détecter une variation de radioactivité, et,
   - à chaque itération k, comparer l'évolution $\Delta S_k = |S_k - S_{k+1}|$ à un seuil de détection $SD_k$ correspondant à la plus faible valeur de variation du signal détectée aux probabilités $\alpha$ et $\beta$ près, $\alpha$ représentant au risque de détection à tort, et $\beta$ représentant un risque de non détection d'un changement de radioactivité.

5. Procédé selon la revendication 4, dans lequel, le seuil de détection $SD_k$ est une fonction de l'écart type de Poisson cumulé des valeurs $S_k$ et $S_{k+1}$ représenté par les équations suivantes :

$$\begin{cases} \sigma^2(S_k) = \dfrac{S_k}{a_k\Delta t} \\[2mm] \sigma^2(S_{k+1}) = \dfrac{S_{k+1}}{a_{k+1}\Delta t} \\[2mm] SD_k \approx Q\sqrt{\sigma^2(S_k) + \sigma^2(S_{k+1})} \end{cases}$$

Q étant un facteur d'élargissement conditionnant le lissage du signal dépendant des probabilités $\alpha$ et $\beta$ selon les

équations suivantes :

$$\begin{cases} \beta + \alpha = 1 \\ \beta \approx \dfrac{1}{\sqrt{2\pi}} \displaystyle\int_{-Q}^{\infty} e^{-x^2/2}\,dx \end{cases}$$

6. Dispositif de mesure en ligne d'un signal de rayonnements ionisants comportant :

   - un détecteur (4) de rayonnement radioactif,
   - un module électronique (8) de conditionnement du signal détecté,
   - un module de comptage d'impulsions (10) contenues dans des échantillons successifs (7) dudit signal détecté, dispositif **caractérisé en ce que** ledit module de comptage comporte :

     - un filtre non destructif utilisant un seuil de détection évolutif,
     - un lisseur adaptatif utilisant un traitement non linéaire en fonction de l'état d'évolution dudit signal de manière à obtenir un taux de comptage lissé desdites impulsions.

7. Dispositif selon la revendication 6 comportant en outre :

   - une pile primaire (11) destinée à mémoriser les nombres $N_{i+m}$ d'impulsions comptées pendant un temps élémentaire $\Delta t$, par un échantillon $E_i$ du signal détecté, i variant de 1 à $N_M$, $N_M$ représentant le nombre de valeurs que peut contenir ladite pile primaire,
   - une pile secondaire (12) destinée à mémoriser les sommes cumulées des nombres $N_i$ normalisés par le temps d'acquisition à chaque échantillon $E_i$, de sorte que ladite pile secondaire (12) contienne une valeur moyenne $S_{NM2}$ obtenue par convergence d'une série de valeurs estimées $S_j$ pour l'échantillon de signal $E_i$.

## Patentansprüche

1. Glättungsverfahren, verbunden mit der Online-Messung eines durch einen Detektor für ionisierende Strahlungen gelieferten Signals, die folgenden Schritte umfassend :

   - Detektieren der in aufeinanderfolgenden Abtastwerten des genannten Signals $E_i$ enthaltenen Impulse,
   - Zählen der Anzahl $N_i$ von detektierten Impulsen,

   **dadurch gekennzeichnet, dass** es die folgenden Schritte umfasst:

   - Anwendung einer zerstörungsfreien Filterung auf das genannte Signal unter Benutzung eines evolutiven Schwellenwerts $SD_k$,
   - Anwendung einer adaptiven Glättung auf das gefilterte Signal, indem man in Abhängigkeit vom Evolutionsstand des genannten Signals eine nichtlineare Verarbeitung benutzt, um eine geglättete Zählrate der genannten Impulse zu erhalten.

2. Verfahren nach Anspruch 1, außerdem die folgenden Schritte umfassend :

   - für einen Abtastwert $E_i$ des detektierten Signals die Anzahlen $N_{i+m}$ von während einer Elementarzeit $\Delta t$ gezählten Impulsen in einer Primärzelle speichern, wobei m von 1 bis $N_M$ variiert und $N_M$ dabei die Anzahl von Werten darstellt, die die genannte Primärzelle enthalten kann, und,
   - in einer Sekundärzelle (12) die kumulierte Summe der Anzahlen $N_{i+m}$ speichern, normalisiert durch die Erfassungszeit $a_j\Delta t$, so dass die genannte Sekundärzelle (12) einen Mittelwert $S_{NM2}$ enthält, erhalten durch Konvergenz einer Serie von geschätzten bzw. ermittelten Werten $S_j$ für den Signalabtastwert $E_i$.

3. Verfahren nach Anspruch 2, bei dem für j = 1 bis $N_{M2}$, die Mittelwerte $S_j$ gemäß der folgenden Gleichung berechnet werden :

$$S_j = \frac{\sum_{m=1}^{m=a_j} N_{i+m}}{a_j \Delta t}$$

4. Verfahren nach Anspruch 1, außerdem die folgenden Schritte umfassend :

- Abtasten der Sekundärzelle (12), um eine Veränderung der Radioaktivität zu detektieren, und,
- bei jeder Iteration $k$ die Entwicklung $\Delta S_k = |S_k - S_{k+1}|$ mit einem Schwellenwert $SD_k$ vergleichen, der bis auf die Wahrscheinlichkeiten $\alpha$ und $\beta$ dem kleinsten Änderungswert des Signals entspricht, wobei $\alpha$ ein Falschdetektions-Risiko und $\beta$ ein Nichtdetektions-Risiko einer Veränderung der Radioaktivität repräsentiert.

5. Verfahren nach Anspruch 4, bei dem der Detetktionsschwellenwert $SD_k$ eine Funktion des Abstands des Typs Poisson, kumuliert, der Werte $S_k$ und $S_{k+1}$, dargestellt durch die folgenden Gleichungen :

$$\begin{cases} \sigma^2(S_k) = \dfrac{S_k}{a_k \Delta t} \\[2ex] \sigma^2(S_{k+1}) = \dfrac{S_{k+1}}{a_{k+1} \Delta t} \\[2ex] SD_k \approx Q\sqrt{\sigma^2(S_k) + \sigma^2(S_{k+1})} \end{cases}$$

wobei Q ein die Glättung des Signals konditionierender Vergrößerungs- bzw. Erweiterungsfaktor ist, der von den Wahrscheinlichkeiten $\alpha$ und $\beta$ gemäß den folgenden Gleichungen abhängt :

$$\begin{cases} \beta + \alpha = 1 \\[2ex] \beta \approx \dfrac{1}{\sqrt{2\pi}} \int_{-Q}^{\infty} e^{-x^2/2} dx \end{cases}$$

6. Online-Messvorrichtung eines Signals von ionisierenden Strahlungen, umfassend:

- einen Detektor von radioaktiver Strahlung,
- einen elektronischen Konditionierungsmodul (8) des detektierten Signals,
- einen Zählmodul (10) von Impulsen, enthalten in sukzessiven Abtastwerten (7) des genannten detektierten Signals, wobei diese Vorrichtung **dadurch gekennzeichnet ist, dass** der genannte Zählmodul umfasst:
- ein einen evolutiven Schwellenwert benutzendes zerstörungsfreies bzw. zerstörungsfrei arbeitendes Filter,
- eine adaptive Glätteinrichtung, die in Abhängigkeit vom Evolutionszustand des genannten Signals eine nichtlineare Verarbeitung anwendet, um eine geglättete Zählrate der genannten Impulse zu erhalten.

7. Vorrichtung nach Anspruch 6, außerdem umfassend :

- eine Primärzelle (11), bestimmt zur Speicherung der Anzahlen $N_{i+m}$ von während einer Elementarzeit $\Delta t$ gezählten Impulsen für einen Abtastwert $E_i$ des detektierten Signals, wobei i von 1 bis $N_M$ variiert und $N_M$ dabei die Anzahl von Werten darstellt, die die genannte Primärzelle enthalten kann,

- eine Sekundärzelle (12), bestimmt zur Speicherung der kumulierten Summen der normalisierten Anzahlen $N_i$ bei jedem Abtastwert $E_i$, so dass die genannte Sekundärzelle (12) einen Mittelwert $S_{NM2}$ enthält, erhalten durch Konvergenz einer Serie von geschätzten bzw. ermittelten Werten $S_j$ für den Signalabtastwert $E_i$.

**Claims**

1. Smoothing method associated with the online measurement of a signal output by an ionising radiation detector comprising the following steps:

   - detecting pulses contained in successive samples of said signal $E_i$,
   - counting the number $N_i$ of pulses detected,

   method **characterised in that** it also comprises the following steps:

   - applying non-destructive filtering to said signal using a variable detection threshold $SD_k$,
   - applying adaptive smoothing to the filtered signal using non-linear processing as a function of the state of change of said signal so as to obtain a smoothed count rate for said pulses.

2. Method according to claim 1, also comprising the following steps:

   - for a sample $E_i$ of the detected signal, use a primary stack to store the numbers $N_{i+m}$ of pulses counted during an elementary time $\Delta t$ where m varies from 1 to $N_M$, where $N_M$ represents the number of values that can be contained in said primary stack, and,
   - store in a secondary stack (12) the cumulated sum of numbers $N_{i+m}$, normalised by the acquisition time $a_j\Delta t$, such that said secondary stack (12) contains a mean value $S_{NM2}$ obtained by convergence of a series of estimated values $S_j$ for the signal sample $E_i$.

3. Method according to claim 2, in which, for j = 1 at $N_{M2}$, the mean values $S_j$ are calculated using the following equation:

$$S_j = \frac{\sum_{m=1}^{m=a_j} N_{i+m}}{a_j\Delta t}$$

4. Method according to claim 1, also comprising the following steps:

   - scan the secondary stack (12) to detect a radioactivity variation, and,
   - at each iteration $k$, compare the variation $\Delta S_k = |S_k - S_{k+1}|$ with a detection threshold $SD_k$ corresponding to the lowest value of the variation of the signal detected allowing for the probabilities $\alpha$ and $\beta$, $\alpha$ representing a risk of incorrect detection and $\beta$ representing a risk of failure to detect a change in radioactivity.

5. Method according to claim 4, in which the detection threshold $SD_k$ is a function of the cumulated Poisson standard deviation of values $S_k$ and $S_{k+1}$ represented by the following equations:

$$\begin{cases} \sigma^2\left(S_k\right) = \dfrac{S_k}{a_k \Delta t} \\[2mm] \sigma^2\left(S_{k+1}\right) = \dfrac{S_{k+1}}{a_{k+1}\Delta t} \\[2mm] SD_k \approx Q\sqrt{\sigma^2\left(S_k\right)+\sigma^2\left(S_{k+1}\right)} \end{cases}$$

where Q is a coverage factor conditioning smoothing of the signal dependent on the probabilities $\alpha$ and $\beta$ according to the following equations:

$$\begin{cases} \beta + \alpha = 1 \\[2mm] \beta \approx \dfrac{1}{\sqrt{2\pi}}\displaystyle\int_{-Q}^{\infty} e^{-x^2/2}\,dx \end{cases}$$

6.  On-line measurement device for an ionising radiation signal comprising:

   - a radioactive radiation detector (4),
   - an electronic conditioning module (8) for detected signals,
   - a count module (10) for pulses contained in successive samples (7) of said detected signal, device **characterised in that** said count module comprises:

      - a non-destructive filter using a variable detection threshold,
      - an adaptive smoother using non-linear processing as a function of the state of variation of said signal so as to obtain a smoothed count rate of said pulses.

7.  Device according to claim 6 also comprising:

   - a primary stack (11) in which the numbers $N_{i+m}$ of pulses counted on a sample $E_i$ of the detected signal during an elementary time $\Delta t$ will be stored, where I varies from 1 to $N_M$, where $N_M$ represents the number of values that said primary stack can contain,
   - a secondary stack (12) in which the cumulated sums of numbers $N_i$ normalised by the acquisition time for each sample $E_i$ will be stored, such that said secondary stack (12) contains a mean value $S_{NM2}$ obtained by convergence of a series of estimated values $S_j$ for the signal sample $E_i$.

## FIG.1

Taux de comptage lissé (s⁻¹)

Détecteur → Electronique de traitement du signal → Compteur + Lisseur

2  6  4  7  8  9  10

## FIG.2

Interruption — 20

Remplir la mémoire FIFO de comptage — 22

Fin interruption — 24

La mémoire de taux de comptage — 11

$N_{i+NM}$ | $N_{i+NM-1}$ | | ⋯ | $N_i$

$N_M$ = Quantité des valeurs sauvegardées
M = taille de la mémoire

## FIG.3

La pile primaire — 11

$N_i$ | $N_{i+1}$ | ⋯ | $N_{i+m}$ | ⋯ | | $N_{i+NM}$

La pile secondaire — 12

$S_j$ | $S_{j+1}$ | ⋯ | $S_{NM2}$

$$S_j = \frac{\sum_{m=1}^{m=aj} N_{i+m}}{aj\Delta t}$$

**Algorithme de lissage**

Résultat (valeur lissée du signal)

$E_i$  ⋯

**Signal brut**

30

**Nouvel échantillon E$_i$**

32

$i = i + 1$

34

Pile primaire $N_{i+m}$

3 modes du système

36

Construction de la
pile secondaire

Pointeur actif $p$

**Pile secondaire $S_k$** —38

**Signal lissé**

$k = 1$

$k = k + 1$

$Ei=Sp$

50

Calcul de $\triangle S_k$ —40

48

54

$p = p + 1$

$i = i + 1$

$p = p - 1$

$i = i - 1$

Calcul de $SD_k$ —42

N

$\triangle S_k > SD_k$

**Filtre**

44

Y

$k > p$

46

Y

N

$k < p$

52

## FIG.4

FIG.5

FIG.6

FIG.7

**EP 2 537 047 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2002146087 A